# EUROPÄISCHE PATENTSCHRIFT

(11) **EP 0 763 994 B1**
(45) Veröffentlichungstag und Bekanntmachung des Hinweises auf die Patenterteilung: **26.07.2000**
(21) Anmeldenummer: 96910033.8
(22) Anmeldetag: 09.04.1996
(51) Int. Cl.: A47J 31/08

(54) **FILTER FÜR AUFGUSSGETRÄNKE, INSBESONDERE KAFFEEFILTER, UND VERFAHREN ZUR HERSTELLUNG EINES DERARTIGEN FILTERS**
FILTER FOR PREPARING BEVERAGES, ESPECIALLY COFFEE FILTER, AND PROCESS FOR PRODUCING IT
FILTRE POUR BOISSONS INFUSEES, NOTAMMENT FILTRE A CAFE ET PROCEDE DE FABRICATION CORRESPONDANT

(30) Priorität: 10.04.1995 DE 19513600
(43) Veröffentlichungstag der Anmeldung: 26.03.1997
(60) Teilanmeldung: 99113600.3
(73) Patentinhaber: MELITTA HAUSHALTSPRODUKTE GmbH & Co. Kommanditgesellschaft, D-32427 Minden (DE)
(72) Erfinder: SIMON, Werner, D-32427 Minden (DE); WITTENSCHLÄGER, Lutz, D-32479 Hille (DE); BERGMANN, Fred, D-27245 Barenburg (DE)
(74) Vertreter: VOSSIUS & PARTNER
(86) Internationale Anmeldenummer: EP9601515
(87) Internationale Veröffentlichungsnummer: WO9632043

(56) Entgegenhaltungen:
- DE-A- 3 434 687
- DE-A- 3 642 898
- DE-A- 4 135 660
- DE-U- 6 939 904
- DE-U- 9 015 872
- DE-U- 9 318 405
- JP-A- 5 132 869

## Beschreibung

Die Erfindung betrifft einen Filter für Aufgußgetränke, insbesondere einen Kaffeefilter, der Poren aufweist, und ein Verfahren zur Herstellung eines derartigen Filters.

Es sind Kaffeefilter aus Papier bekannt, wie die Filtertüten® der Anmelderin. Diese Kaffeefilter sind gekreppt, um ihre Oberfläche zu vergrößern, und weisen Poren auf, die mit dem Auge nicht oder kaum erkennbar sind.

Das DE-GM-69 39 904 beschreibt Kaffeefilter mit einer Porengröße zwischen 5 µm bis 20 µm, die ermöglichen, daß aromatragende Kolloidalteilchen den Filter passieren können.

Die JP-A-5 132 869 beschreibt Kaffeefilter mit einer Porengröße zwischen 0,01 mm bis 0,5 mm.

Die DE-OS-28 02 240, DE-OS-34 34 687, DE-OS-36 42 898 und die DE-OS-41 35 660 betreffen Kaffeefilter aus folienartigem Material aus Kunststoff bzw. Metall, in denen scharfkantige Löcher bzw. Poren ausgebildet sind.

Der Erfindung liegt die Aufgabe zugrunde, einen Filter für Aufgußgetränke bereitzustellen, insbesondere einen Kaffeefilter, der einfach herstellbar ist und das Filtrat, wie den Kaffee, verbessert sowie ein Verfahren zur Herstellung eines derartigen Filters.

Diese Aufgabe wird mit einem Filter bzw. einem Verfahren zur Herstellung eines Filters gemäß den Ansprüchen gelöst.

Der Erfindung liegt der Gedanke zugrunde, einen Filter für Aufgußgetränke bereitzustellen, insbesondere einen Kaffeefilter, der aus fließpapierartigem, vliesartigem bzw. faserigem Material hergestellt ist, mit den Merkmalen gemäß Anspruch 1. Bevorzugt ist eine maximale mittlere Porenweite von etwa 0,3 mm bis etwa 0,4 mm. Ein Bereich einer mittleren Porenweite von 0,15 bis 0,25 mm ist besonders bevorzugt.

Unter ursprünglicher oder mittlerer Faserdichte des Filtermaterials ist die Faserdichte des Materials vor dem Ausbilden der genannten Poren bzw. die Faserdichte des Materials gemittelt über die gesamte Filterfläche zu verstehen.

Ein erfindungsgemäßer Filter ist aus geeigneten Papieren und Vliesstoffen aus natürlichen und/oder synthetischen Fasern auf Cellulosebasis und/oder aus Fasern aus synthetischen Polymeren sowie aus Gemischen der genannten Fasern hergestellt. Das Flächengewicht bevorzugter Materialien beträgt etwa 10 bis etwa 100 g/m². Das faserige Material ist bevorzugt Filterpapier, wie es bislang bereits für die Filtertüten® verwendet wurde. Beim Ausbilden der Poren in diesem Material, was vorzugsweise durch Nadeln oder Wasserstrahlen geschieht, sind die Ränder bzw. Kanten der Poren nicht scharf, sondern, durch das faserige Material bedingt, unscharf bzw. "ausgefranst" bzw. porös.

Poren derartiger Größe sind besonders einfach herstellbar und verbessern insbesondere den Geschmack des Kaffeefiltrats. In überraschender Weise filtern diese Poren trotz ihrer relativ großen mittleren Porenweite selbst Pulverteilchen, wie Kaffeeteilchen, die eine wesentlich kleinere Größe, bis hinunter zu 10 µm, aufweisen. Dieser Effekt beruht vermutlich auf den an den unscharfen Rändern der Poren wirkenden, relativ großen Kapillarkräften.

Durch das Ausbilden von Poren mit mittleren Porenweiten von größer als etwa 0,1 mm wird die Filtrationsleistung bzw. Durchflußrate des Filters erhöht. Dadurch werden Verstopfungsprobleme bzw. das Überlaufen des Filters insbesondere beim Einsatz in Kaffeemaschinen vermieden. Durch die größeren Poren im Filter können außerdem wesentlich mehr kolloidale, aromatragende Teilchen den Filter passieren, und es werden Alkaloide, wie Coffein, welche leicht von herkömmlichen Papierfiltern beim Aufbrühen von Kaffee adsorbiert werden, nicht zurückgehalten wie in herkömmlichen Papierfiltern. Dadurch wird der Geschmack des Filtrats, wie insbesondere beim Aufbrühen von Kaffee, verbessert.

Bei der Verwendung des faserigen Materials mit derartig großen Poren verringert das mögliche Quellen des Filtermaterials die Durchlaßeigenschaften des Filters nicht in derart merklicher Weise, wie bei herkömmlichen Filterpapieren.

Die Vergrößerung der Porenweite im Vergleich zu herkömmlichen Kaffeefiltern aus Papier hat weiterhin den Vorteil, daß der erfindungsgemäße Filter für eine Vielzahl von Aufgußgetränken, vor allem für andere, weniger gebräuchliche Kaffeesorten, wie Espresso, Malz-, Korn-, Karamelkaffee verwendet werden kann. Ein Kreppen des Filtermaterials ist außerdem nicht mehr erforderlich, was sich kostenreduzierend auswirkt.

Aufgrund der mittleren Porenweite bis 0,4 mm in dem faserigen Material wird die Bildung von Satz im Filtrat und die merkliche Trübung des Filtrats verhindert.

Durch einen mittleren Porenweitenbereich von etwa 0,1 mm bis etwa 0,4 mm und bevorzugt bis etwa 0,3 mm werden außerdem im Kaffee enthaltene Lipide zurückgehalten, so daß sie nicht in das Filtrat gelangen und die Cholesterolwerte des Konsumenten negativ beeinträchtigen können. Es wurde nachgewiesen, daß insbesondere die im Kaffee enthaltenen Lipide den Cholesterolgehalt im Blut von Konsumenten dauerhaft erhöhen und sich gesundheitsgefährdend auswirken können (vgl., "Identity of the cholesterol-raising factor from boiled coffee and its effects on liver function enzymes" in Journal of Lipid Research, Vol. 35, 1994).

Bevorzugt beträgt die freie Porenfläche bis zu 20 % der gesamten Filterfläche. Es wurde gefunden, daß ein derartiger Anteil an freier Porenfläche wegen der bereits im Filterpapier vorhandenen Porosität eine zufriedenstellende Filterwirkung ermöglicht. Bei einem größeren Anteil freier Lochfläche tritt verstärkt eine Satzbildung im Filtrat auf. Bei einer mittleren Porenweite von etwa 0,3 mm in einem erfindungsgemäßen Filter und einer freien Porenfläche von 20 % tritt weiterhin keine erhöhte Durchlässigkeit für die gesundheitlich nachteilig wirkenden und unerwünschten Kaffeelipide auf.

Außerdem wurde gefunden, daß die Verarbeitbarkeit und Reißfestigkeit eines Papiers durch den angegebenen Bereich der mittleren Porenweiten nicht beeinträchtigt wird, so daß der erfindungsgemäße Filter stabil bleibt, durch Prägen verbundene Filterteile nicht geschwächt werden sowie andere Verpackungs- und Verarbeitungsprobleme vermieden werden.

Vorzugsweise nimmt die mittlere Porenweite und/oder die Flächendichte der Poren zum im Einsatz unten befindlichen Bereich des Filters zu. Dadurch wird der Durchlauf im unteren Bereich des Filters intensiviert, also in dem Bereich, in dem im Vergleich zu den anderen Bereichen sich größere Kaffeemehlmengen befinden. Dabei ist die Durchlässigkeit des erfindungsgemäßen Filters vorzugsweise so abgestimmt, daß der Durchtritt von Filtrat durch den Filter über die Höhe der Flüssigkeitsmenge im Filter in etwa konstant bleibt. Dadurch werden Unterschiede in der Durchlässigkeit durch unterschiedliche Getränkepartikelmengen und unterschiedliche Drücke kompensiert, und es wird das Aufgußgetränk besser und gleichmäßiger genutzt.

Weiter bevorzugt sind bei einem erfindungsgemäßen Filter die Poren derartig ausgebildet und angeordnet, daß sie eine bestimmte Perforationslinie bilden, entlang der der Filter durch Trennen der Perforationslinie gezielt verkleinert werden kann. Bei einem Kaffeefilter ist so z.B. der für einen Filterhalter der Größe 1 x 4 bestimmte Filter für einen Filterhalter der Größe 1 x 2 verkleinerbar.

Zusätzlich oder alternativ können die Poren derartig ausgebildet und angeordnet sein, daß sie bestimmte Knicklinien im Filter bilden, die ein Aufklappen des Filters an bestimmten Stellen, wie in der Nähe der Prägungen, unterstützen.

Die Aufgaben, Vorteile und Merkmale der Erfindung werden nachstehend anhand von Beispielen und mit Bezug auf die Zeichnung näher erläutert. Es zeigen:
- Fig. 1: eine schematische Darstellung einer Seitenansicht einer Ausführungsform des erfindungsgemäßen Filters,
- Fig. 2: einen vergrößerten Ausschnitt A aus Fig. 1 mit einer schematischen Darstellung von bevorzugten Poren,
- Fig. 3: einen vergrößerten Ausschnitt A aus Fig. 1 mit einer weiteren Ausführungsform von bevorzugten Poren,
- Fig. 4: eine schematische Vergrößerung des Ausschnitts B aus Fig. 2,
- Fig. 5: eine Darstellung der Verteilung des faserigen Materials im Bereich einer Pore gemäß Fig. 4,
- Fig. 6: eine REM-Aufnahme mit 100-facher Vergrößerung einer in einem erfindungsgemäßen Filter mit einer Nadelwalze ausgebildeten Pore,
- Fig. 7: eine REM-Aufnahme gemäß Fig. 6 mit 200-facher Vergrößerung,
- Fig. 8: eine REM-Aufnahme mit 102-facher Vergrößerung eines erfindungsgemäßen Filters mit einer durch einen Wasserstrahl ausgebildeten Pore,
- Fig. 9: eine REM-Aufnahme mit 106-facher Vergrößerung eines erfindungsgemäßen Filters mit einer weiteren durch einen Wasserstrahl ausgebildeten Pore,
- Fig. 10: eine REM-Aufnahme mit 400-facher Vergrößerung eines erfindungsgemäßen Filters mit einer durch Spannungsentladung ausgebildeten Pore,
- Fig. 11: eine REM-Aufnahme einer weiteren durch Spannungsentladung ausgebildeten Pore gemäß Fig. 8,
- Fig. 12: ein statistisches Diagramm mit den Kaffeesatzgehalten von mit unterschiedlichen Filtern gefilterten Kaffeefiltraten,
- Fig. 13: ein weiteres statistisches Diagramm mit den Kaffeesatzgehalten von mit unterschiedlichen Filtern gefilterten Kaffeefiltraten, und
- Fig. 14: eine Darstellung der Durchflußrate abhängig von der Porenfläche.

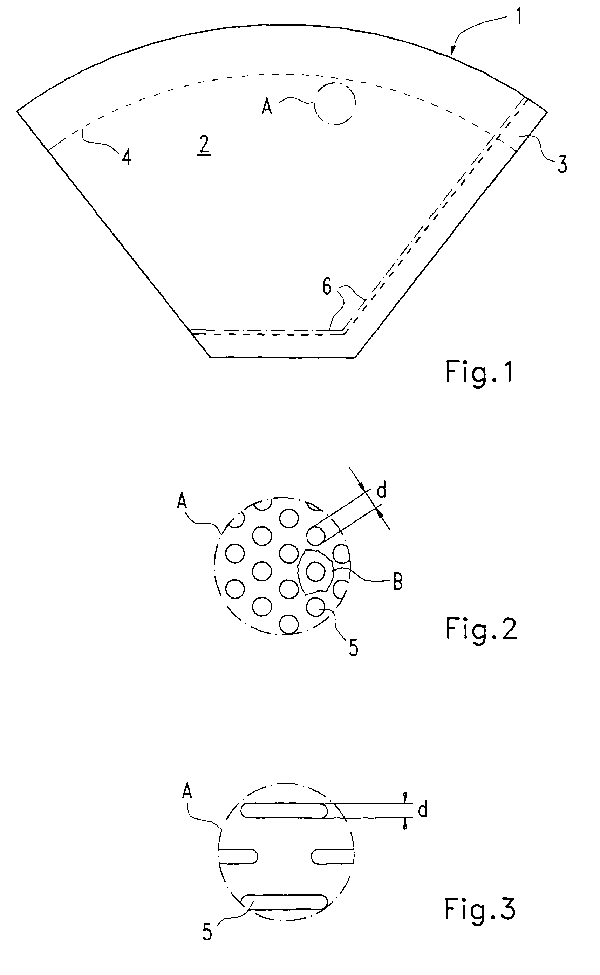

Der erfindungsgemäße Filter 1 gemäß Fig. 1 ist vorzugsweise durch zwei aufeinandergeklappte Lagen von Filtermaterial gebildet. Diese Lagen sind entlang dem unteren und einem seitlichen Kantenbereich 3, z.B. durch Prägen, verbunden. In Fig. 1 ist die oberste Lage 2 des Filtermaterials erkennbar.

Das Filtermaterial weist Poren 5, wie z.B. in den Figuren 2 und 3 dargestellt, auf. Diese Poren 5 sind bevorzugt entlang einer Linie 4 derartig angeordnet und ausgebildet, daß sie eine Perforationslinie durch beide Lagen des Filters bilden. Entlang dieser Perforationslinie 4 ist dann der obere Teil des Filters in einfacher Weise abtrennbar, um den Filter auch für einen kleineren Filterhalter verwenden zu können. Außerhalb des Kantenbereichs 3, jedoch in der Nähe davon, bilden außerdem die Poren vorzugsweise Knicklinien 6, damit der Filter in einfacher Weise in einem bekannten Filterhalter auseinanderklappt und sich öffnet, um z.B. das Einfüllen von Kaffeepulver zu erleichtern.

Aus den Figuren 2 und 3 ist erkennbar, daß die Poren 5 im erfindungsgemäßen Filter eine beliebige Gestalt haben können, solange sie gemäß den Merkmalen des Anspruchs 1 ausgebildet sind.

Die in Fig. 2 dargestellten, im wesentlichen runden Poren 5 sind bevorzugt, da sie durch ein relativ einfaches Bearbeiten des Filtermaterials ausgebildet werden können. Vorzugsweise werden dabei die Poren in dem faserigen Naterial durch Bohren, Schlitzen, Hitze und Spannungsentladungen ausgebildet. Weiter bevorzugt wird das faserige Material mit einer Nadelwalze gewalzt oder durch Wasserstrahlen bearbeitet. Das Nadeln zur Ausbildung des erfindungsgemäßen Filters ist besonders einfach durchführbar und besitzt gegenüber anderen Verfahren, wie z.B. dem Ausbilden von Poren durch Laser, Fräsen oder Stanzen einen großen Kosten- und Strukturvorteil, der nachfolgend eingehender beschrieben wird. Beim Nadeln des faserigen Materials durch eine Nadelwalze sind die Poren in der Aufsicht leicht birnenförmig, was durch die Verschwenkbewegung der an der Walze befestigten Nadeln zu der vorbeigeführten Materialbahn verursacht wird.

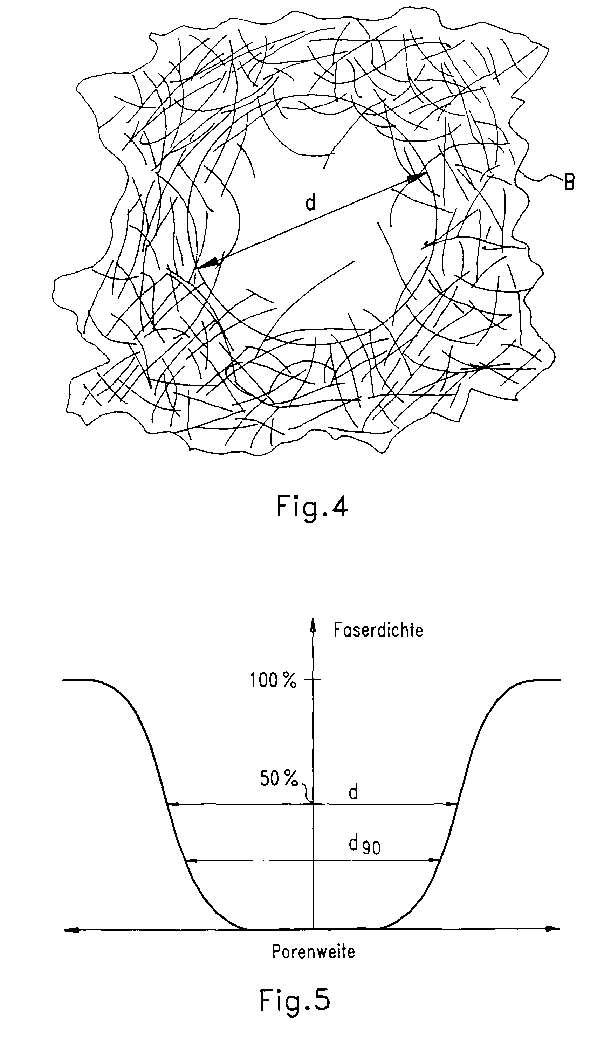

Fig. 4 zeigt eine Vergrößerung des Ausschnitts B aus Fig. 2. Dabei soll insbesondere deutlich werden, daß eine erfindungsgemäß in faserigem Material ausgebildete Pore keinen scharfen Rand aufweist, sondern einen der unscharf bzw. porös ist. Eine derartige Struktur wird z.B. durch das Nadeln des faserigen Materials hervorgerufen, das in erster Linie teilweise elastisches Material verdrängt und nicht entfernt. Aufgrund des Fasercharakters des Materials bildet sich eine Pore mit einer mittleren Porenweite d. Diese Struktur bewirkt eine Erhöhung der Kapillarkräfte der zu filternden Flüssigkeit insbesondere an den Porenrändern, wodurch die Filterwirkung der einfach herzustellenden Poren erhöht wird.

Fig. 5 zeigt die statistische Verteilung des faserigen Materials im Bereich einer Pore, wie z.B. einer Pore gemäß Fig. 4. Dabei ist auf der horizontalen Achse die Porenweite und auf der vertikalen Achse die Faserdichte im Bereich der Pore aufgetragen. In der näheren Umgebung der Pore verringert sich die Faserdichte des Materials hin zum Mittelpunkt der Pore. Dabei ist die Steigung der statistischen Verteilung abhängig vom Material und von der Art des Ausbildens der Pore. Bei einer mittleren Porenweite d beträgt definitionsgemäß die Faserdichte 50 % der Faserdichte des ursprünglichen Materials, d.h. des Materials vor dem Ausbilden der Poren oder der mittleren Faserdichte des Materials ("Halbwerts-Faserdichte").

Ein erfindungsgemäßes Material weist bei einer Porenweite d₉₀, die 90 % der mittleren Porenweite d entspricht, eine Faserdichte von etwa 0 % bis etwa 40 % auf. Bevorzugt ist eine Faserdichte bei der Porenweite d₉₀ von etwa 0 bis 20 % und noch mehr bevorzugt von etwa 5 % bis 15 % der ursprünglichen oder mittleren Faserdichte.

Die Faserigkeit des Materials im Bereich der Pore ist abzustimmen auf die chemische und physikalische Konsistenz des Aufgußgetränks.

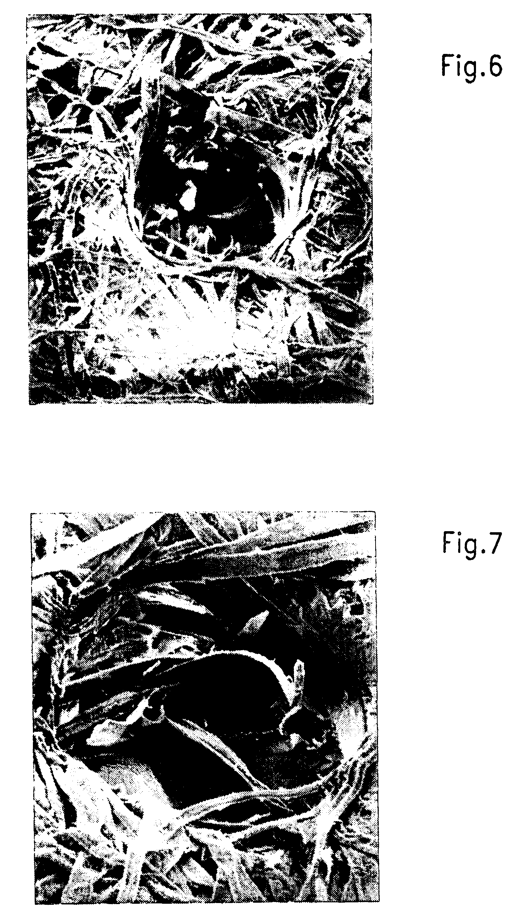

Die REM-Aufnahmen gemäß Figuren 6 und 7 zeigen deutlich den unscharfen Rand einer Pore in einem erfindungsgemäßen Filter. Teilweise sind die Fasern des faserigen Materials durch das Nadeln an den Rand verdrängt und teilweise zerrissen bzw. durchtrennt.

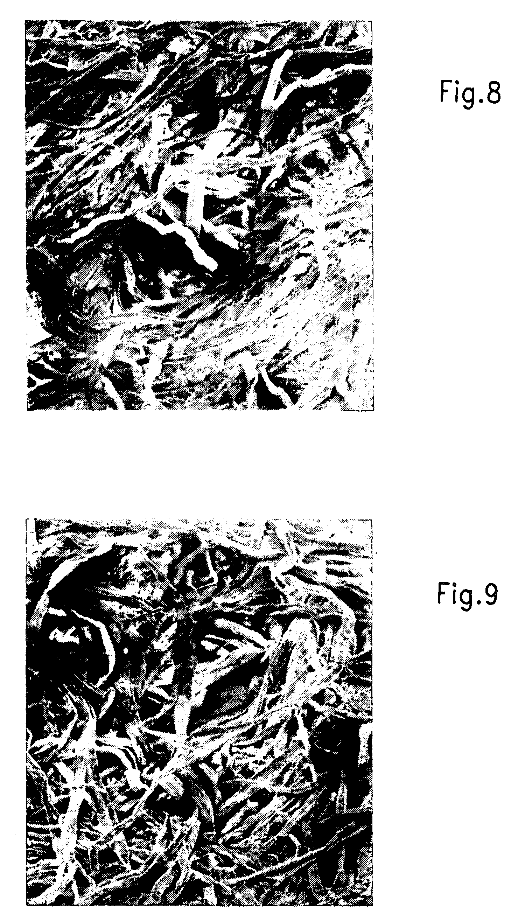

Die Figuren 8 und 9 stellen durch Wasserstrahl ausgebildete Poren dar. Bei diesen Poren verändert sich die Faserdichte zum Mittelpunkt der Pore hin nur sehr langsam. Makroskopisch weist ein derartig behandelter Filter eine grobe Struktur mit mikroskopisch kleinen freien Durchgangsöffnungen auf.

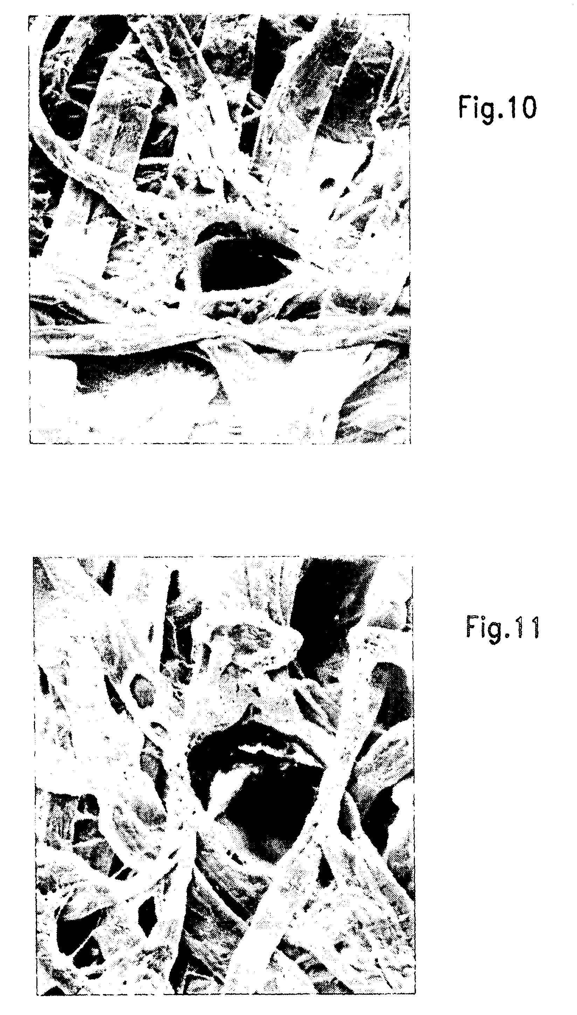

Die Figuren 10 und 11 zeigen, daß das Ausbilden der Poren durch Spannungsentladung die Fasern scheinbar an den Rändern der Poren zusammenschweißt und an den Rändern eine poröse Struktur ausbildet.

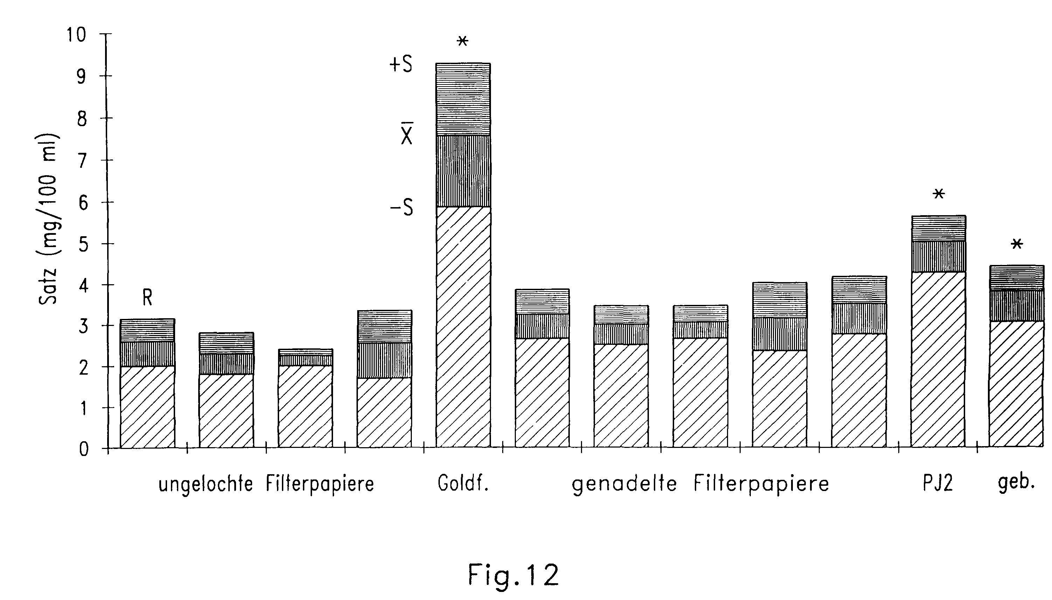

Fig. 12 zeigt ein statistisches Diagramm zur Satzbestimmung. Mit einem "*" wurde dabei der statistisch signifikante Unterschied zur Referenz R (LORD-Test, zweiseitig, 95 % Wahrscheinlichkeit) dargestellt. Es sind dabei jeweils die Mittelwerte x mit den Standardabweichungen S gezeigt. Die ersten vier Muster sind ungelochte herkömmliche Kaffeefiltervergleichspapiere. An fünfter Stelle folgt ein sogenannter "Goldfilter", der aus einer geschlitzten Metallfolie mit Poren mit den Maßen 0,18 mm x 2 mm besteht. An sechster bis zehnter Stelle sind genadelte Muster von erfindungsgemäßen Filtern mit einer mittleren Porenweite von etwa 0,25 mm dargestellt. An elfter Stelle befindet sich ein mit "PJ2" gekennzeichnetes Muster eines erfindungsgemäßen Filters, bei dem die Poren mittels eines Wasserstrahlverfahrens mit einer mittleren Porenweite von 0,2 bis 0,3 mm ausgebildet wurden. An letzter Stelle befindet sich ein gebohrtes Muster, wobei in ein herkömmliches Filterpapier Poren mit einem Durchmesser von 0,6 mm ausgebildet wurden. Alle dargestellten Werte entstammen Maschinenbrühungen.

Es wird dabei deutlich, daß bei der Verwendung faserigen Materials die durch den Satz bedingte Trübung des Kaffeefiltrats gegenüber einem Filter mit scharfrandigen Poren deutlich herabgesetzt wird.

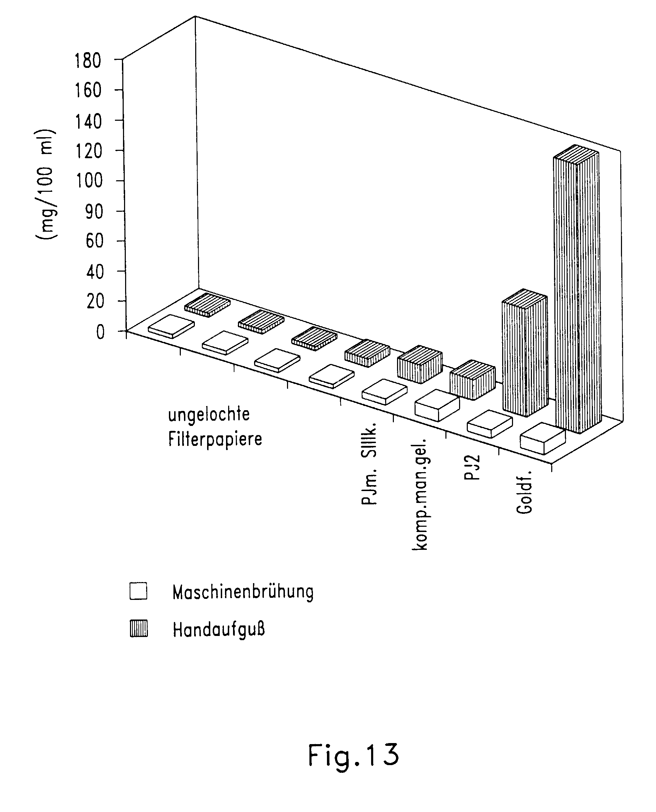

Fig. 13 stellt insbesondere die Satzbildung bei einer Maschinenbrühung der Satzbildung bei einem Handaufguß gegenüber. Die ersten vier Muster sind herkömmliche Kaffeefilterpapiere. An fünfter Stelle ist ein mit einem Wasserstrahlverfahren gelochter erfindungsgemäßer Filter, wie der Filter "PJ2" in Figur 12, dargestellt, wobei das obere Drittel des Filters mit Silikon abgedichtet wurde. An sechster Stelle ist ein vollständig mit einer Porenweite von 0,6 mm gelochter Filter dargestellt. Es folgen dann die bereits im Zusammenhang mit Fig. 12 dargestellten Filter.

Es ist in Fig. 13 deutlich erkennbar, daß sich der im Zusammenhang mit Fig. 12 dargestellte vorteilige Effekt erfindungsgemäßer Filter bei einem Handaufguß anstelle einer Maschinenbrühung noch deutlich erhöht.

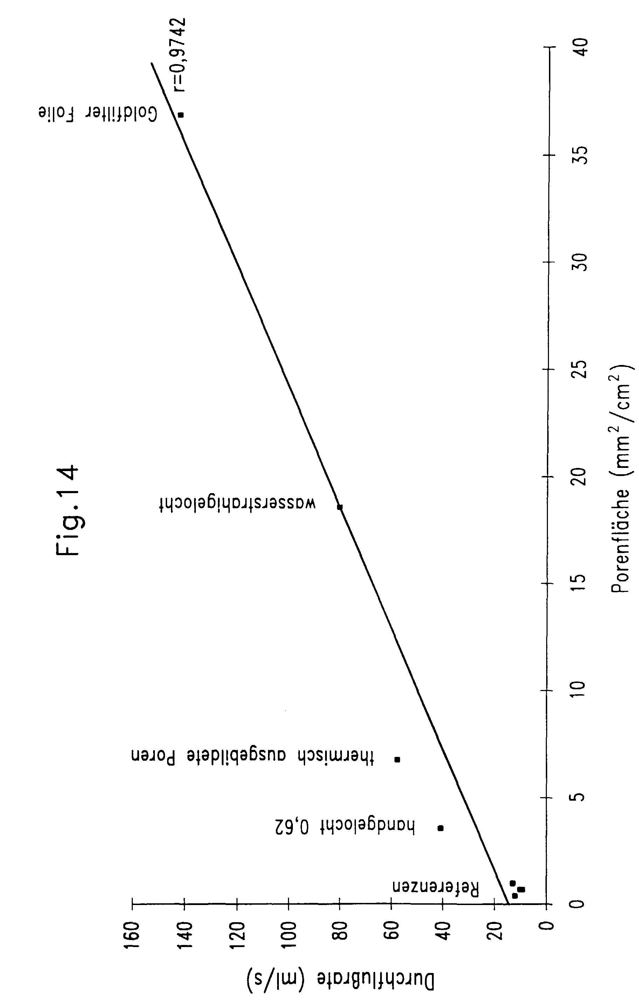

Fig. 14 zeigt die von der Porenfläche abhängige Durchflußrate von verschiedenen Mustern. Die Durchflußrate ist eine Kenngröße des Filterpapiers ermittelt an einem Prüfstück mit definierter Fläche und vordefiniertem Wasserdruck und Wassertemperatur. Die Porenfläche ist das Produkt aus der Porengröße (mm²) und der Anzahl (pro cm²), "r" ist der statistische Korrelationskoeffizient für die Ausgleichsgerade.

Beim wassergestrahlten Muster wird die Durchflußrate durch die Dünnstellen (stark verringerte Faserdichte) bzw. Porosität des Kaffeefilterpapiers und die zusätzlich ausgebildeten Poren hervorgerufen. Das entspräche einem undurchlässigen Filtermaterial mit Poren mit Durchmessern von etwa 0,5 mm. Ein derartiger Filter ist also bevorzugt für Zwecke, bei denen eine hohe Durchflußrate trotz einer guten Filtration benötigt wird, um z.B. das Überlaufen des Filters beim automatischen Aufbrühen in einer Kaffeemaschine zu verhindern.

## Patentansprüche

1. Filter für Aufgußgetränke, insbesondere Kaffeefilter, wobei der Filter (1) aus faserigem Material hergestellt ist und Poren (5) mit einer mittleren Porenweite (d) von etwa 0,1 mm bis etwa 0,4 mm, vorzugsweise bis etwa. 0,3 mm, gemessen bei einer Faserdichte, die etwa 50 % der ursprünglichen oder mittleren Faserdichte des Materials beträgt, aufweist, wobei bei einer Porenweite (d₉₀), die 90 % der mittleren Porenweite (d) entspricht, die Faserdichte etwa 0 % bis etwa 40 % der ursprünglichen oder mittleren Faserdichte des Materials beträgt.

2. Filter nach Anspruch 1, dadurch gekennzeichnet, daß bei einer Porenweite (d₉₀), die 90 % der mittleren Porenweite (d) entspricht, die Faserdichte etwa 0 % bis etwa 20 % der ursprünglichen oder mittleren Faserdichte des Materials beträgt.

3. Filter nach Anspruch 1 oder 2, dadurch gekennzeichnet, daß bei einer Porenweite (d₉₀), die 90% der mittleren Porenweite (d) entspricht, die Faserdichte etwa 5 % bis etwa 15 % der ursprünglichen oder mittleren Faserdichte des Materials beträgt.

4. Filter nach einem der verstehenden Ansprüche, dadurch gekennzeichnet, daß bei einer Porenweite (d₉₀) , die 90 % der mittleren Porenweite (d) entspricht, die Faserdichte etwa 10 % der ursprünglichen oder mittleren Faserdichte des Materials beträgt.

5. Filter nach einem der vorstehenden Ansprüche, dadurch gekennzeichnet, daß der Filter eine freie Porenfläche hat, die bis etwa 20 % der gesamten Filterfläche beträgt.

6. Filter nach einem der vorstehenden Ansprüche, dadurch gekennzeichnet, daß der Filter (1) aus geeignetem Papier hergestellt ist.

7. Filter nach einem der vorstehenden Ansprüche, dadurch gekennzeichnet, daß die Poren (5) durch Nadeln des faserigen Materials hergestellt sind.

8. Filter nach einem der Ansprüche 1 bis 6, dadurch gekennzeichnet, daß die Poren (5) durch Wasserstrahlen des faserigen Materials hergestellt sind.

9. Filter nach einem der vorstehenden Ansprüche, dadurch gekennzeichnet, daß die mittlere Porenweite (d) und/oder die Flächendichte der Poren (5) zum im Einsatz unten befindlichen Bereich des Filters (1) zunimmt.

10. Filter nach einem der vorstehenden Ansprüche, dadurch gekennzeichnet, daß die Poren (5) so ausgebildet und angeordnet sind, daß sie eine Perforation (4) bilden, um beim Trennen der Perforation (4) den Filter (1) zu verkleinern, so daß er in einen kleineren Filterhalter einsetzbar ist.

11. Filter nach einem der vorstehenden Ansprüche, dadurch gekennzeichnet, daß die Poren (5) derartig ausgebildet und angeordnet sind, daß sie Knicklinien (6) bilden, die das Öffnen des Filters (1) beim Einsetzen in den Filterhalter unterstützen.

12. Verfahren zum Herstellen eines Filters nach einem der vorstehenden Ansprüche, mit den Verfahrensschritten: Bereitstellen eines faserigen Materials und Ausbilden von Poren (5) in dem Material mit einer mittleren Porenweite (d) von etwa 0,1 mm bis etwa 0,4 mm, vorzugsweise bis etwa 0,3 mm, gemessen bei einer Faserdichte, die etwa 50 % der ursprünglichen oder mittleren Faserdichte des Materials beträgt, wobei bei einer Porenweite (d₉₀), die 90 % der mittleren Porenweite (d) entspricht, die Faserdichte etwa 0 % bis etwa 40 % der ursprünglichen oder mittleren Faserdichte des Materials beträgt.

13. Verfahren nach Anspruch 12 dadurch gekennzeichnet, daß die Poren (5) durch Nadeln ausgebildet werden.

14. Verfahren nach Anspruch 12 oder 13, dadurch gekennzeichnet, daß die Poren (5) durch Walzen des Materials mit einer Nadelwalse ausgebildet werden.

15. Verfahren nach Anspruch 12, dadurch gekennzeichnet, daß die Poren (5) durch Wasserstrahlen des Materials ausgebildet werden.

## Claims

1. A filter for preparing beverages, especially a coffee filter, the filter (1) being produced from fibrous material and having pores (5) with an average pore width (d) of about 0.1 mm to about 0.4 mm, preferably to about 0.3 mm, measured at a fiber density of about 50% of the original or average fiber density of the material, wherein at a pore width (d₉₀) which corresponds to 90% of the average pore width (d), the fiber density is about 0% to about 40% of the original or average fiber density of the material.

2. The filter of claim 1, characterized in that at a pore width (d₉₀) which corresponds to 90% of the average pore width (d), the fiber density is about 0% to about 20% of the original or average fiber density of the material.

3. The filter of claim 1 or 2, characterized in that at a pore width (d₉₀) which corresponds to 90% of the average pore width (d), the fiber density is about 5% to about 15% of the original or average fiber density of the material.

4. The filter of any one of the preceding claims, characterized in that at a pore width (d₉₀) which corresponds to 90% of the average pore width (d), the fiber density is about 10% of the original or average fiber density of the material.

5. The filter of any one of the preceding claims, characterized in that the filter has a free pore surface which amounts to up to about 20% of the entire filter surface.

6. The filter of any one of the preceding claims, characterized in that the filter (1) is produced from suitable paper.

7. The filter of any one of the preceding claims, characterized in that the pores (5) are produced by piercing the fibrous material by means of needles.

8. The filter of any one of claims 1 to 6, characterized in that the pores (5) are produced by means of water jets penetrating the fibrous material.

9. The filter of any one of the preceding claims, characterized in that the average pore width (d) and/or surface density of the pores (5) increases towards that area of the filter (1) which in the practical application of the filter forms the bottom part.

10. The filter of any one of the preceding claims, characterized in that the pores (5) are formed and located in such a way that they form a perforation (4) and that the tearing of said perforation (4) results in a reduction in size of the filter (1) so that it can be inserted into a smaller filter holder.

11. The filter of any one of the preceding claims, characterized in that the pores (5) are formed and located in such a way that they form folding lines (6) which support the opening of the filter (1) upon inserting it in the filter holder.

12. A process for the production of a filter according to any one of the preceding claims and comprising the steps of providing a fibrous material and forming pores (5) in the material having an average pore width (d) of about 0.1 mm to about 0.4 mm, preferably to about 0.3 mm, measured at a fiber density of about 50% of the original or average fiber density of the material, wherein at a pore width (d₉₀) which corresponds to 90% of the average pore width (d), the fiber density is about 0% to about 40% of the original or average fiber density of the material.

13. The process of claim 12, characterized in that the pores (5) are formed by means of needles.

14. The process of claim 12 or 13, characterized in that the pores (5) are formed by means of rolling the material with a needle roller.

15. The process of claim 12, characterized in that the pores (5) are formed by water jets penetrating the material.

## Revendications

1. Filtre pour des boissons infusées notamment filtre à café, le filtre (1) étant réalisé en une matière fibreuse avec des pores (5) ayant une taille moyenne de pores (d) d'environ 0,1 mm et jusqu'à environ 0,4 mm, de préférence jusqu'à environ 0,3 mm, mesurée pour une densité de fibres correspondant sensiblement à 50 % de la densité initiale ou moyenne des fibres de la matière, dans lequel
pour une dimension de pores (d₉₀) qui correspond à 90 % de la taille moyenne des pores (d), la densité des fibres représente entre environ 0 % jusqu'à environ 40 % de la densité d'origine ou moyenne des fibres de la matière.

2. Filtre selon la revendication 1,
caractérisé en ce que
pour une taille de pores (d₉₀) qui représente 90 % de la taille moyenne des pores (d), la densité des fibres représente entre environ 0 % jusqu'à environ 20 % de la densité d'origine ou moyenne des fibres de la matière.

3. Filtre selon les revendications 1 ou 2,
caractérisé en ce que
pour une taille de pores (d₉₀) qui correspond à 90 % de la taille moyenne de pores (d), la densité des fibres représente entre environ 5 % jusqu'à environ 15 % de la densité d'origine ou moyenne des fibres de la matière.

4. Filtre selon l'une des revendications précédentes,
caractérisé en ce que
pour une taille de pores (d₉₀) qui correspond à 90 % de la taille moyenne de pores (d), la densité des fibres représente environ 10 % de la densité d'origine ou de la densité moyenne des fibres de la matière.

5. Filtre selon l'une quelconque des revendications précédentes,
caractérisé en ce que
le filtre a une surface de pores, libre qui représente jusqu'à environ 20 % de la surface totale du filtre.

6. Filtre selon l'une quelconque des revendications précédentes,
caractérisé en ce que
le filtre (1) est fabriqué en un papier approprié.

7. Filtre selon l'une quelconque des revendications précédentes,
caractérisé en ce que
les pores (5) sont réalisés par aiguilletage de la matière fibreuse.

8. Filtre selon l'une des revendications 1 à 6,
caractérisé en ce que
les pores (5) sont réalisés par des jets d'eau appliqués à la matière fibreuse.

9. Filtre selon l'une quelconque des revendications précédentes,
caractérisé en ce que
la taille moyenne des pores (d) et/ou la densité de surface des pores (5) augmentent vers la zone du filtre (1) qui se trouve en bas lorsque le filtre est utilisé.

10. Filtre selon l'une des revendications précédentes,
caractérisé en ce que
les pores (5) sont réalisés et disposés pour former une perforation (4), pour qu'en séparant les perforations (4) on puisse diminuer le filtre afin de pouvoir le placer dans un plus petit support de filtre.

11. Filtre selon l'une des revendications précédentes,
caractérisé en ce que
les pores (5) sont réalisés et disposés pour former des lignes de pliage (6) favorisant l'ouverture du filtre (1) lorsqu'il est placé dans le support de filtre.

12. Procédé de fabrication d'un filtre selon l'une des revendications précédentes
comprenant l'étape de préparation d'une matière fibreuse et réalisation des pores (5) dans la matière avec une taille moyenne de pores (d) d'environ 0,1 mm jusqu'à environ 0,4 mm, de préférence jusqu'à environ 0,3 mm, mesurée pour une densité de fibres qui correspond à environ 50 % de la densité d'origine ou de la densité moyenne des fibres de la matière, de telle façon que, pour une taille de pores (d₉₀) représentant 9C % de la taille moyenne de pores (d), la densité des fibres représente entre environ 0 % jusqu'à environ 40 % de la densité d'origine ou de la densité moyenne des fibres de la matière.

13. Procédé selon la revendication 12,
caractérisé en ce que
les pores (5) sont réalisés par aiguilletage.

14. Procédé selon les revendications 12 ou 13,
caractérisé en ce que
les pores (5) sont réalisés par calandrage de la matière avec un cylindre à picots.

15. Procédé selon la revendication 12,
caractérisé en ce que
les pores (5) sont obtenus en traitant la matière avec des jets d'eau.
